# EUROPÄISCHE PATENTSCHRIFT

(11) **EP 2 639 408 B1**
(45) Veröffentlichungstag und Bekanntmachung des Hinweises auf die Patenterteilung: **08.05.2019**
(21) Anmeldenummer: 12159013.7
(22) Anmeldetag: 12.03.2012
(51) Int. Cl.: F01D 9/04, F01D 11/00, F01D 25/24, F04D 29/54

(54) **Gasturbine, Leitschaufel für ein Gehäuse einer Gasturbine sowie Verfahren zur Herstellung einer Leitschaufel**
Gas turbine, guide vane for a housing of a gas turbine and method of manufacturing a guide vane
Turbine à gaz, aube directrice pour carter de turbine à gaz et procédé de fabrication d'une aube directrice

(43) Veröffentlichungstag der Anmeldung: 18.09.2013
(73) Patentinhaber: MTU Aero Engines AG, 80995 München (DE)
(72) Erfinder: Schlemmer, Markus, 84048 Mainburg/Wambach (DE); Rozak, Marcin, 37-500 Jaroslaw (PL)

(56) Entgegenhaltungen:
- EP-A2- 1 452 693
- DE-B- 1 042 828
- FR-A1- 2 954 401
- US-A- 4 767 260
- US-A1- 2009 129 917
- US-B1- 6 227 798

## Beschreibung

Die Erfindung betrifft eine Gasturbine, insbesondere ein Flugzeugtriebwerk, mit einem Gehäuse und wenigstens einer im Gehäuse angeordneten Leitschaufel. Die Erfindung betrifft weiterhin eine Leitschaufel zur Anordnung an einem Gehäuse einer Gasturbine sowie ein Verfahren zum Herstellen einer Leitschaufel für ein Gehäuse einer Gasturbine.

In axial durchströmten Gasturbinen wie beispielsweise Flugzeugtriebwerken werden in den Verdichter- und Turbinenstufen Leitschaufeln und Laufschaufeln üblicherweise abwechselnd hintereinander in einem Gehäuse angeordnet. Laufschaufeln bilden den bewegten bzw. rotierenden Teil der Gasturbine, mit welchen das strömende Betriebsmedium entweder verdichtet oder entspannt wird. Mit Hilfe von Leitschaufeln kann die durch die Laufschaufeln erzeugte Strömung definiert weitergeleitet werden. Leitschaufeln für Gasturbinen umfassen neben einem Schaufelblatt in der Regel zumindest ein radial äußeres Deckband, das am Schaufelblatt der Leitschaufel angeordnet ist und eine aerodynamische Strömungspfadbegrenzung für das Betriebsmedium der Gasturbine im Bereich der Gehäusewand darstellt. Das radial äußere Deckband weist dabei einen Oberflächenbereich auf, der im Wesentlichen senkrecht zu der Oberfläche des Schaufelblatts verläuft. Auf der dem aerodynamischen Strömungspfad abgewandten Seite des Deckbands umfassen Leitschaufeln häufig Deckbandhalteeinrichtungen, mittels welchen die Leitschaufeln im Bereich ihres radial äußeren Deckbands am Gehäuse festgelegt werden.

Die FR 2 954401 A1 beschreibt ein Verfahren und ein System zum Kühlen von Turboarbeitsmaschinen.

Die DE 1042 828 B beschreibt einen Axialverdichter mit einem Spalt zum zusätzlichen Einbringen von Fördermittel unterhalb der Nenndrehzahl.

Die US 4 767 260 A beschreibt eine Leitschaufelanordnung einer Gasturbinenmaschine mit einer Kühlung.

Die US 2009/129917 A1 beschreibt eine Turbinenstufe einer Turboarbeitsmaschine mit einer Dichtung.

Aus der EP 1 452 693 A2 ist eine gekühlte Leitschaufel bekannt.

Als nachteilig an den bekannten Gasturbinen ist der Umstand anzusehen, dass eine gezielte Gasbeaufschlagung von nicht unmittelbar im Strömungspfad des Betriebsmediums angeordneten Abschnitten des Gehäuses während des Betriebs der Gasturbine nur vergleichsweise schwer zu bewerkstelligen ist.

Aufgabe der vorliegenden Erfindung ist es, eine Gasturbine der eingangs genannten Art zu schaffen, welche während des Betriebs eine verbesserte Gasbeaufschlagung von nicht unmittelbar im Strömungspfad des Betriebsmediums angeordneten Gehäusebereichen ermöglicht. Eine weitere Aufgabe der Erfindung ist es, eine Leitschaufel für ein Gehäuse einer derartigen Gasturbine sowie ein Verfahren zum Herstellen einer derartigen Leitschaufel zu schaffen.

Die Aufgaben werden erfindungsgemäß durch eine Gasturbine mit den Merkmalen des Patentanspruchs 1, eine Leitschaufel mit den Merkmalen des Patentanspruchs 9 sowie durch ein Verfahren mit den Merkmalen des Patentanspruchs 11 zum Herstellen einer Leitschaufel für ein Gehäuse einer Gasturbine gelöst. Vorteilhafte Ausgestaltungen der Erfindung sind in den jeweiligen Unteransprüchen angegeben, wobei vorteilhafte Ausgestaltungen der erfindungsgemäßen Gasturbine als vorteilhafte Ausgestaltungen der erfindungsgemäßen Leitschaufel sowie des erfindungsgemäßen Verfahrens anzusehen sind.

Eine erfindungsgemäße Gasturbine umfasst wenigstens eine in einem Gehäuse angeordnete Leitschaufel, welche eine Deckbandanordnung sowie ein sich von der Deckbandanordnung radial nach innen erstreckendes Schaufelblatt umfasst. Die Deckbandanordnung weist ein radial äußeres Deckband und eine Deckbandhalteeinrichtung auf, mittels welcher das Deckband am Gehäuse festgelegt ist. Eine verbesserte Gasbeaufschlagung von nicht unmittelbar im Strömungspfad des Betriebsmediums angeordneten Gehäusebereichen ist erfindungsgemäß dadurch ermöglicht, dass die Deckbandhalteeinrichtung oder Teile davon wenigstens einen Luftdurchtrittskanal umfassen, der im Bereich des äußeren Deckbands einen Strömungsdurchtritt durch die Deckbandhalteeinrichtung hindurch ermöglicht. Dabei kann die geometrische Ausgestaltung und die Lage des Luftdurchtrittskanals im Gehäuse optimal an den jeweiligen Einsatzzweck angepasst werden.

Weiterhin können mehrere Luftdurchtrittskanäle über den Umfang des Gehäuses verteilt vorgesehen sein, wodurch ein besonders präzise einstellbarer Luft- bzw. Gasdurchsatz ermöglicht wird. Der Luftdurchtrittskanal ermöglicht insbesondere eine verbesserte Gasbeaufschlagung und Kühlung von weiteren Gehäusebauteilen wie beispielsweise stromab angeordneten Leitschaufelkränzen und dergleichen. Die Gasturbine kann beispielsweise als Flugzeugtriebwerk ausgebildet sein.

Die Deckbandhalteeinrichtung auf einer dem Schaufelblatt gegenüberliegenden Seite des Deckbands umfasst wenigstens einen Deckbandhaken, mittels welchem das Deckband am Gehäuse festgelegt ist. Der Deckbandhaken kann dabei grundsätzlich einen oder mehrere Luftdurchtrittskanäle umfassen oder frei von Luftdurchtrittskanälen ausgebildet sein. Weiterhin kann vorgesehen sein, dass die Deckbandhalteeinrichtung zwei oder mehr Deckbandhaken umfasst, wodurch eine mechanisch besonders stabile Anbindung der Leitschaufel an das Gehäuse ermöglicht ist.

Es ist vorgesehen, dass der Luftdurchtrittskanal schlitzförmig und/oder im Querschnitt zumindest bereichsweise kreisbogenförmig und/oder ellipsenbogenförmig ausgebildet ist. Hierdurch ist eine besonders gute Kontrolle des Luft- bzw. Gasdurchsatzes ermöglicht. Darüber hinaus erlauben die genannten Ausgestaltungen des Luftdurchtrittskanals eine Reduzierung der Spannungskonzentrationen am radial äußeren Deckband.

Weitere Vorteile ergeben sich, indem die Deckbandanordnung einteilig mit dem Schaufelblatt ausgebildet und/oder am Schaufelblatt befestigt ist. Auf diese Weise kann die Leitschaufel besonders flexibel ausgebildet und am Gehäuse festgelegt werden.

In einer weiteren vorteilhaften Ausgestaltung der Erfindung ist vorgesehen, dass mehrere Leitschaufeln über ihre Deckbandanordnungen miteinander verbunden sind und ein Leitschaufelsegment und/oder einen Leitschaufelkranz bilden. Indem mehrere Leitschaufeln zu einem Segment oder einem Cluster mit zwei oder mehr Schaufeln pro Einheit zusammengefasst sind, reduziert sich in Relation zu Einzelschaufeln die Anzahl der Fugen/Spalte und damit auch die Spaltverluste. Den aggressiven Heißgasen bieten sich zudem weniger Angriffsflächen, was der Haltbarkeit insgesamt zu Gute kommt. Entsprechendes gilt für einen vollständigen Leitschaufelkranz. Die Leitschaufeln bilden aufgrund ihrer Verbindung mechanisch stabile Einheiten, wodurch Relativbewegungen und Verschleiß reduziert werden.

Weitere Vorteile ergeben sich, indem wenigstens zwei aneinander angrenzende Deckbandhalteeinrichtungen jeweils eine Nut umfassen, in welchen ein Dichtelement formschlüssig angeordnet ist. Hierdurch können benachbarte Deckbandhalteeinrichtungen bzw. Leitschaufeln über eine Art Nut-Feder-Verbindung miteinander verbunden werden, wobei als Dichtelement beispielsweise ein Dichtblech verwendet werden kann.

Dabei kann in weiterer Ausgestaltung vorgesehen sein, dass das Dichtelement wenigstens einen Luftdurchtrittskanal umfasst. Hierdurch kann der Luftdurchsatz im Verbindungsbereich zweier Leitschaufeln erfolgen, wobei der Luftdurchtrittskanal jedoch derart im Dichtelement auszubilden ist, dass während des Betriebs der Gasturbine kein Strömungsdurchtritt durch das Deckband, sondern nur durch die Deckbandhalteeinrichtung erfolgt.

In weiterer vorteilhafter Ausgestaltung umfasst das Gehäuse der Gasturbine ein Gasleitsystem, mittels welchem während des Betriebs der Gasturbine durch den Luftdurchtrittskanal durchtretendes Gas zu Gehäusebauteilen geleitet wird, die bezüglich einer vorgegebenen Strömungsrichtung des Gehäuses stromab des Luftdurchtrittskanals angeordnet sind. Beispielsweise kann die mit Hilfe des wenigstens einen Luftdurchtrittskanals gezielt einstellbare Leckageströmung zur Gasbeaufschlagung weiterer am Gehäuse angeordneter Leitschaufelstufen, Halterungen und dergleichen verwendet werden.

Weitere Vorteile ergeben sich, indem die wenigstens eine Leitschaufel im Bereich eines Verdichters und/oder im Bereich einer Turbine angeordnet ist. Hierdurch können die vorstehend beschriebenen Vorteile der Leitschaufel, wie beispielsweise die verbesserte Gasbeaufschlagung und Kühlung von weiteren Gehäusebauteilen, wahlweise auf der Verdichter- und/oder auf der Turbinenseite der Gasturbine verwirklicht werden. Die wenigstens eine Leitschaufel wird hierzu im Gehäusebereich des Verdichters bzw. der Turbine eingebaut und leitet während des Betriebs der Gasturbine das Arbeitsmittel auf die Laufschaufeln des Verdichters und/oder der Turbine.

Ein weiterer Aspekt der Erfindung betrifft eine Leitschaufel zur Anordnung an einem Gehäuse einer Gasturbine, wobei die Leitschaufel eine Deckbandanordnung aufweist, welche ein im Einbauzustand radial äußeres Deckband sowie eine Deckbandhalteeinrichtung umfasst, mittels welcher das Deckband am Gehäuse festlegbar ist. Weiterhin weist die erfindungsgemäße Leitschaufel ein sich von der Deckbandanordnung radial nach innen erstreckendes Schaufelblatt auf. Erfindungsgemäß ist dabei eine verbesserte Gasbeaufschlagung von nicht unmittelbar im Strömungspfad des Betriebsmediums angeordneten Bereichen eines zugeordneten Gehäuses einer Gasturbine dadurch ermöglicht, dass die Deckbandhalteeinrichtung oder Teile davon wenigstens einen Luftdurchtrittskanal umfassen, der im Einbauzustand der Leitschaufel einen Strömungsdurchtritt durch die Deckbandhalteeinrichtung hindurch ermöglicht. Die sich hieraus ergebenden Vorteile sind den vorhergehenden Beschreibungen des erfindungsgemäßen Gehäuses zu entnehmen.

In einer vorteilhaften Ausgestaltung der Erfindung ist vorgesehen, dass die Leitschaufel zusammen mit mindestens einer und vorzugsweise mit drei weiteren Leitschaufeln ein Leitschaufelsegment bildet. Indem mehrere Leitschaufeln zu einem Segment oder einem Cluster mit zwei oder mehr Schaufeln pro Einheit zusammengefasst sind, reduziert sich in Relation zu Einzelschaufeln die Anzahl der Fugen/Spalte und damit auch die Spaltverluste. Den aggressiven Heißgasen bieten sich zudem weniger Angriffsflächen, was der Haltbarkeit insgesamt zu Gute kommt. Die Leitschaufeln bilden aufgrund ihrer Verbindung mechanisch stabile Einheiten, wodurch Relativbewegungen und Verschleiß reduziert werden. Darüber hinaus können die Segmente einfach zu einem vollständigen Leitschaufelkranz gefügt werden.

Ein weiterer Aspekt der Erfindung betrifft ein Verfahren zum Herstellen einer Leitschaufel nach Anspruch 8. Die sich hieraus ergebenden Vorteile sind den vorhergehenden Beschreibungen zu entnehmen.

Weitere Merkmale der Erfindung ergeben sich aus den Ansprüchen, dem Ausführungsbeispiel sowie anhand der Zeichnungen.

Dabei zeigt:
- Fig. 1: eine schematische Perspektivansicht eines vier erfindungsgemäße Leitschaufeln umfassenden Leitschaufelsegments für ein Gehäuse einer Gasturbine;
- Fig. 2: eine vergrößerte Detailansicht eines in Fig. 1 gezeigten Deckbandbereichs II;
- Fig. 3: eine Aufsicht des Leitschaufelsegments; und
- Fig. 4: eine vergrößerte Frontalansicht des in Fig. 3 gezeigten Deckbandbereichs IV.

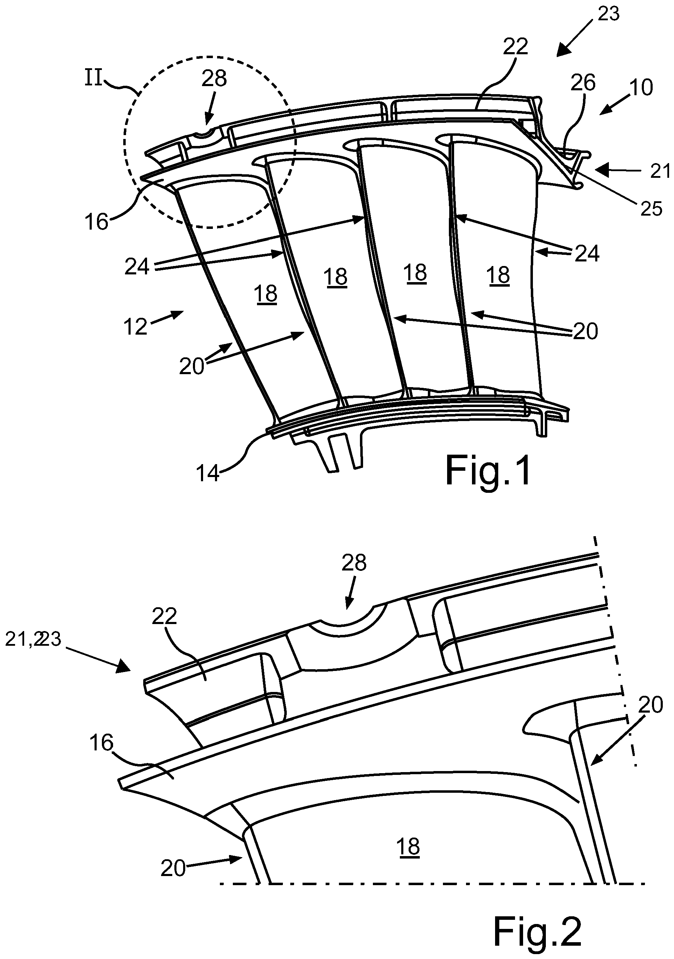

Fig. 1 zeigt eine schematische Perspektivansicht eines Leitschaufelsegments 10 für ein Gehäuse (nicht gezeigt) einer als Flugzeugtriebwerk ausgebildeten Gasturbine und wird im Folgenden in Zusammenschau mit Fig. 2 erläutert werden, in welcher eine vergrößerte Detailansicht eines in Fig. 1 gezeigten Deckbandbereichs II dargestellt ist. Das Leitschaufelsegment 10 besteht dabei aus vier erfindungsgemäßen Leitschaufeln 12. Die Leitschaufeln 12 umfassen ein gemeinsames radial inneres Deckband 14 sowie ein gemeinsames radial äußeres Deckband 16. Zwischen dem inneren Deckband 14 und dem äußeren Deckband 16 erstrecken sich vier Schaufelblätter 18 der Leitschaufeln 12. Das radial äußere Deckband 16 ist Teil einer Deckbandanordnung 21, wobei die Deckbandanordnung 21 zusätzlich eine Deckbandhalteeinrichtung 23 umfasst, mittels welcher das Deckband 16 bzw. das gesamte Leitschaufelsegment 10 am Gehäuse der Gasturbine festlegbar ist. Die Deckbandhalteeinrichtung 23 umfasst hierzu auf ihrer den Schaufelblättern 18 abgewandten Seite einen im Bereich der Profileintrittskanten 20 der Schaufelblätter 18 angeordneten Deckbandhaken 22 sowie einen im Bereich der Profilaustrittskanten 24 der Schaufelblätter 18 angeordneten Deckbandhaken 26. Zur Einstellung eines kontrollierten Luftdurchsatzes während des Betriebs des Flugzeugtriebwerks umfasst der Deckbandhaken 22 einen Luftdurchtrittskanal 28. Man erkennt, dass der Luftdurchtrittskanal 28, der auch als "Fingernailslot" bezeichnet werden kann, im Wesentlichen rinnenförmig mit einem kreisbogenförmigen Querschnitt ausgebildet ist. Der mit Hilfe des Luftdurchtrittskanals 28 einstellbare Luftdurchsatz im Bereich des äußeren Deckbands 16 kann innerhalb des Gehäuses zur Gasbeaufschlagung und Kühlung von in Strömungsrichtung betrachtet stromab liegenden Gehäusebauteilen wie etwa nachfolgenden Leitschaufelstufen und dergleichen verwendet werden. Zu diesem Zweck kann das Gehäuse beispielsweise ein Gasleitsystem (nicht gezeigt) umfassen, mittels welchem während des Betriebs der Gasturbine durch den Luftdurchtrittskanal 28 durchtretendes Gas zu Gehäusebauteilen geleitet wird, die bezüglich einer vorgegebenen Strömungsrichtung des Gehäuses stromab des Luftdurchtrittskanals 28 angeordnet sind. Neben einer gezielten Einstellbarkeit des Luftdurchsatzes während des Betriebs des Flugzeugtriebwerks sorgt der Luftdurchtrittskanal 28 zudem vorteilhaft für eine Verringerung der Spannungskonzentrationen an der Deckbandanordnung 21. Eine besonders effektive Verringerung der Spannungskonzentrationen wird insbesondere durch im Querschnitt runde, elliptische oder ringsegment- bzw. ellipsensegmentförmige Luftdurchtrittskanäle 28 erzielt. Es ist jedoch zu betonen, dass die Geometrie des Luftdurchtrittskanals 28 grundsätzlich nicht beschränkt ist. Weiterhin kann vorgesehen sein, dass der vorliegend am linken Rand des Leitschaufelsegments 10 ausgebildete Luftdurchtrittskanal 28 an einer anderen Position, beispielsweise in der Mitte oder am rechten Rand des Leitschaufelsegments 10 ausgebildet ist und/oder dass nur manche der im Gehäuse verbauten Leitschaufeln 12 bzw. Leitschaufelsegmente 28 einen Luftdurchtrittskanal 28 umfassen und/oder dass das Leitschaufelsegment 10 mehrere Luftdurchtrittskanäle 28 umfasst. Das gezeigte Leitschaufelsegment 10 ist einteilig durch Urformen hergestellt. Alternativ kann beispielsweise auch vorgesehen sein, dass die Leitschaufeln 12 einzeln hergestellt und zum Leitschaufelsegment 10 bzw. zu einem vollständigen Leitschaufelkranz zusammengebaut und anschließend miteinander verschweißt werden.

Man erkennt in Fig. 1 weiterhin eine seitliche Nut 25, welche sich an der Seite der Deckbandhalteeinrichtung 23 vom stromauf gelegenen Deckbandhaken 22 über einen Teilbereich des Deckbands 16 bis zum stromab gelegenen Deckbandhaken 26 erstreckt. In die Nut 25 kann ein Teil der Deckbandhalteeinrichtung 23 wie beispielsweise ein Dichtblech (nicht gezeigt) formschlüssig eingesteckt werden. Hierdurch können benachbarte Deckbandhalteeinrichtungen 23 bzw. Leitschaufelsegmente 10 über eine Art Nut-Feder-Verbindung miteinander verbunden werden. Dabei kann vorgesehen sein, dass das Dichtelement zusätzlich zu einem der Deckbandhaken 22, 26, einen Luftdurchtrittskanal 28 umfasst. Hierdurch kann der Luftdurchsatz im Verbindungsbereich zweier Leitschaufeln 12 bzw. Leitschaufelsegmente 10 erfolgen. Es ist jedoch zu beachten, dass der Luftdurchtrittskanal 28 nur in solchen Bereichen des Dichtelements auszubilden ist, welche im montierten Zustand des Dichtelements im Bereich eines der Deckbandhaken 22, 26 zu liegen kommen. Mit anderen Worten soll das Dichtelement nicht derart ausgebildet sein, dass beispielsweise Heißgase zwischen aneinander angrenzenden Deckbänder 16 hindurch treten können.

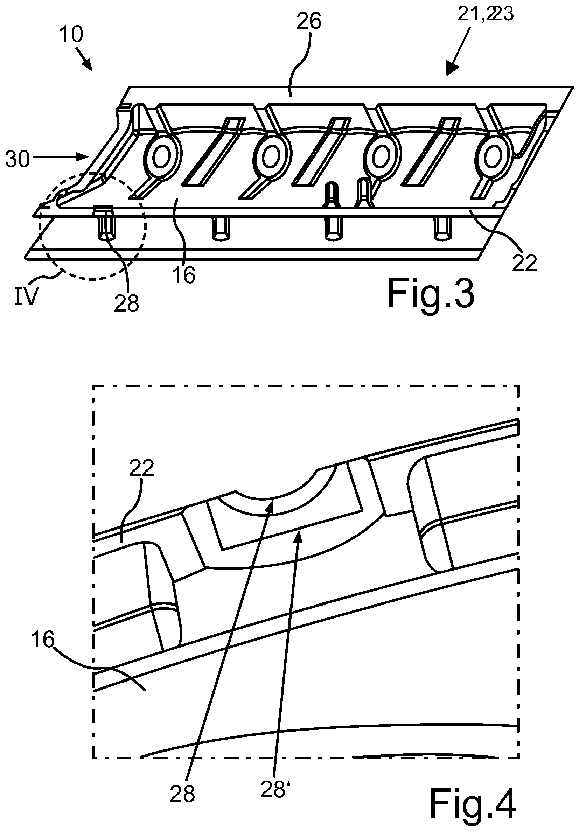

Fig. 3 zeigt eine Aufsicht des Leitschaufelsegments 10. Dabei ist erkennbar, dass der in Strömungsrichtung betrachtet stromab gelegene Deckbandhaken 26 im Gegensatz zum stomauf gelegenen Deckbandhaken 22 keinen Luftdurchtrittskanal 28 umfasst. Es ist jedoch zu betonen, dass grundsätzlich auch der stromab gelegene Deckbandhaken 26 einen oder mehrere Luftdurchtrittskanäle umfassen kann, um den Luftdurchsatz einzustellen. Weiterhin erkennt man, dass zwischen den Deckbandhaken 22, 26 eine gegenüber der Oberfläche des Deckbands 16 erhabene Versteifungsstruktur 30 ausgebildet ist.

Fig. 4 zeigt eine vergrößerte Frontalansicht des in Fig. 3 gezeigten Deckbandbereichs IV. Man erkennt insbesondere die kreisbogenförmige Querschnittsgeometrie des Luftdurchtrittskanals 28 im Deckbandhaken 22. Mit dem Bezugszeichen 28' ist eine alternative Ausgestaltung des Luftdurchtrittskanals 28 angedeutet, welche eine rechteckige Querschnittsgeometrie aufweisen würde. Die alternative Ausgestaltung des Luftdurchtrittskanals 28' würde dabei aufgrund ihrer im Vergleich zum rinnenförmigen Luftdurchtrittskanal 28 größeren Querschnittsfläche einen entsprechend größeren Luftdurchsatz erlauben.

## Patentansprüche

1. Gasturbine, insbesondere Flugzeugtriebwerk, mit einem Gehäuse, in welchem wenigstens eine Leitschaufel (12) angeordnet ist, wobei die Leitschaufel (12) zumindest
- eine Deckbandanordnung (21) mit einem radial äußeren Deckband (16) und mit einer Deckbandhalteeinrichtung (23), mittels welcher das Deckband (16) am Gehäuse festgelegt ist, sowie
- ein sich von der Deckbandanordnung (21) radial nach innen erstreckendes Schaufelblatt (18) umfasst;
wobei
- die Deckbandhalteeinrichtung (23) oder Teile davon wenigstens einen Luftdurchtrittskanal (28) umfasst, der einen Strömungsdurchtritt durch die Deckbandhalteeinrichtung (23) hindurch ermöglicht, und wobei
- die Deckbandhalteeinrichtung (23) auf einer dem Schaufelblatt (18) gegenüberliegenden Seite des Deckbands (16) wenigstens einen Deckbandhaken (22, 26) umfasst, mittels welchem das Deckband (16) am Gehäuse festgelegt ist, **dadurch gekennzeichnet, dass** der Deckbandhaken (22), welcher im Bereich einer Profileintrittskante (20) des Schaufelblatts (18) angeordnet ist, den Luftdurchtrittskanal (28) umfasst, wobei der Luftdurchtrittskanal (28) schlitzförmig und/oder im Querschnitt zumindest bereichsweise kreisbogenförmig und/oder ellipsenbogenförmig ausgebildet ist.

2. Gasturbine nach Anspruch 1, **dadurch gekennzeichnet, dass** die Deckbandanordnung (21) einteilig mit dem Schaufelblatt (18) ausgebildet und/oder am Schaufelblatt (18) befestigt ist.

3. Gasturbine nach einem der Ansprüche 1 bis 2, **dadurch gekennzeichnet, dass** mehrere Leitschaufeln (12) über ihre Deckbandanordnungen (21) miteinander verbunden sind und ein Leitschaufelsegment (10) und/oder einen Leitschaufelkranz bilden.

4. Gasturbine nach Anspruch 3, **dadurch gekennzeichnet, dass** wenigstens zwei aneinander angrenzende Deckbandhalteeinrichtungen (23) jeweils eine Nut (25) umfassen, in welchen ein Dichtelement formschlüssig angeordnet ist.

5. Gasturbine nach Anspruch 4, **dadurch gekennzeichnet, dass** das Dichtelement wenigstens einen Luftdurchtrittskanal (28) umfasst.

6. Gasturbine nach einem der Ansprüche 1 bis 5, **dadurch gekennzeichnet, dass** das Gehäuse ein Gasleitsystem umfasst, mittels welchem während des Betriebs der Gasturbine durch den Luftdurchtrittskanal (28) durchtretendes Gas zu Gehäusebauteilen geleitet wird, die bezüglich einer vorgegebenen Strömungsrichtung des Gehäuses stromab des Luftdurchtrittskanals (28) angeordnet sind.

7. Gasturbine nach einem der Ansprüche 1 bis 6, **dadurch gekennzeichnet, dass** die wenigstens eine Leitschaufel (12) im Bereich eines Verdichters und/oder im Bereich einer Turbine angeordnet ist.

8. Leitschaufel (12) zur Anordnung an einem Gehäuse einer Gasturbine, umfassend:
- eine Deckbandanordnung (21) mit einem im Einbauzustand radial äußeren Deckband (16) und mit einer Deckbandhalteeinrichtung (23), mittels welcher das Deckband (16) am Gehäuse festlegbar ist; sowie
- ein sich von der Deckbandanordnung (21) radial nach innen erstreckendes Schaufelblatt (18);
wobei
- die Deckbandhalteeinrichtung (23) oder Teile davon, welche wenigstens einen Luftdurchtrittskanal (28) umfasst, der im Einbauzustand der Leitschaufel (12) einen Strömungsdurchtritt durch die Deckbandhalteeinrichtung (23) hindurch ermöglicht, und wobei die Deckbandhalteeinrichtung (23) auf einer dem Schaufelblatt (18) gegenüberliegenden Seite des Deckbands (16) wenigstens einen Deckbandhaken (22, 26) umfasst, mittels welchem das Deckband (16) am Gehäuse festlegbar ist,
**dadurch gekennzeichnet, dass** der Deckbandhaken (22), welcher im Bereich einer Profileintrittskante (20) des Schaufelblatts (18) angeordnet ist, den Luftdurchtrittskanal (28) umfasst, wobei der Luftdurchtrittskanal (28) schlitzförmig und/oder im Querschnitt zumindest bereichsweise kreisbogenförmig und/oder ellipsenbogenförmig ausgebildet ist.

9. Leitschaufel (12) nach Anspruch 8, **dadurch gekennzeichnet, dass** diese zusammen mit mindestens einer und vorzugsweise drei weiteren Leitschaufeln (12) ein Leitschaufelsegment (10) bildet.

10. Verfahren zum Herstellen einer Leitschaufel (12) nach Anspruch 8.

## Claims

1. Gas turbine, in particular an aircraft engine, having a housing in which at least one guide vane (12) is arranged, the guide vane (12) at least comprising
- a shroud assembly (21) having a radially outer shroud (16) and having a shroud holding means (23), by means of which the shroud (16) is fastened to the housing, and
- an airfoil (18) extending radially inwards from the shroud assembly (21); where
- the shroud holding means (23), or parts thereof, comprises at least one air passage channel (28), which allows flow passage through the shroud holding means (23); and where
- the shroud holding means (23) comprises at least one shroud hook (22, 26) on a side of the shroud (16) opposite the airfoil (18), by means of which hook the shroud (16) is fastened to the housing, **characterized in that**
the shroud hook (22), which is arranged in the region of a profile leading edge (20) of the airfoil (18), comprises the air passage channel (28), the air passage channel (28) being slot-shaped and/or having a cross section in the shape of an arc and/or an elliptical arc at least in regions.

2. Gas turbine according to claim 1, **characterized in that** the shroud assembly (21) is formed integrally with the airfoil (18) and/or is secured to the airfoil (18).

3. Gas turbine according to either claim 1 or claim 2, **characterized in that** a plurality of guide vanes (12) are interconnected via the shroud assemblies (21) thereof and form a guide vane segment (10) and/or a guide vane ring.

4. Gas turbine according to claim 3, **characterized in that** at least two adjacent shroud holding means (23) each comprise a groove (25) in which a sealing element is form-fittingly arranged.

5. Gas turbine according to claim 4, **characterized in that** the sealing element comprises at least one air passage channel (28).

6. Gas turbine according to any of claims 1 to 5, **characterized in that** the housing comprises a gas-conducting system, by means of which gas passing through the air passage channel (28) during operation of the gas turbine is conducted to housing components which are arranged downstream of the air passage channel (28) with respect to a predetermined direction of flow of the housing.

7. Gas turbine according to any of claims 1 to 6, **characterized in that** the at least one guide vane (12) is arranged in the region of a compressor and/or in the region of a turbine.

8. Guide vane (12) for arrangement on a housing of a gas turbine, comprising:
- a shroud assembly (21) having a radially outer shroud (16) when installed and having a shroud holding means (23), by means of which the shroud (16) can be fastened to the housing; and
- an airfoil (18) extending radially inwards from the shroud assembly (21); where
- the shroud holding means (23) or parts thereof, which comprises at least one air passage channel (28) which allows flow passage through the shroud holding means (23) when the guide vane (12) is installed, and the shroud holding means (23) comprising, on a side of the shroud (16) opposite the airfoil (18), at least one shroud hook (22, 26), by means of which the shroud (16) can be fastened to the housing, **characterized in that** the shroud hook (22), which is arranged in the region of a profile leading edge (20) of the airfoil (18), comprises the air passage channel (28), the air passage channel (28) being slot-shaped and/or having a cross section in the shape of an arc and/or an elliptical arc at least in regions.

9. Guide vane (12) according to claim 8, **characterized in that** said guide vane, together with at least one and preferably three additional guide vanes (12), forms a guide vane segment (10).

10. Method for producing a guide vane (12) according to claim 8.

## Revendications

1. Turbine à gaz, notamment de moteur d'aéronef, comportant un carter dans lequel au moins une aube directrice (12) est disposée, l'aube directrice (12) comprenant au moins
- un ensemble carénage (21) comportant un carénage (16) radialement extérieur et un dispositif de maintien de carénage (23) au moyen duquel le carénage (16) est fixé au carter, ainsi que
- une pale (18) s'étendant radialement vers l'intérieur à partir de l'ensemble carénage (21) ;
- le dispositif de maintien de carénage (23) ou des parties de celui-ci comprenant au moins un canal de passage d'air (28) qui permet un passage d'écoulement à travers le dispositif de maintien de carénage (23) ; et
le dispositif de maintien de carénage (23) comprenant, sur un côté du carénage (16) opposé à la pale (18), au moins un crochet de carénage (22, 26) au moyen duquel le carénage (16) est fixé au carter,
**caractérisée en ce que**
le crochet de carénage (22), qui est disposé dans la zone d'un bord d'entrée de profilé (20) de la pale (18), comprend le canal de passage d'air (28), le canal de passage d'air (28) étant en forme de fente et/ou au moins partiellement en forme d'arc de cercle et/ou en forme d'arc d'ellipse en coupe transversale.

2. Turbine à gaz selon la revendication 1, **caractérisée en ce que** l'ensemble carénage (21) est formé d'un seul tenant avec la pale (18) et/ou est fixé sur la pale (18).

3. Turbine à gaz selon l'une des revendications 1 et 2, **caractérisée en ce que** plusieurs aubes directrices (12) sont reliées les unes aux autres par leurs ensembles carénage (21) et forment un segment d'aubes directrices (10) et/ou une couronne d'aubes directrices.

4. Turbine à gaz selon la revendication 3, **caractérisée en ce qu'**au moins deux dispositifs de maintien de carénage (23) adjacents comprennent chacun une rainure (25) dans laquelle un élément d'étanchéité est disposé par complémentarité de forme.

5. Turbine à gaz selon la revendication 4, **caractérisée en ce que** l'élément d'étanchéité comprend au moins un canal de passage d'air (28).

6. Turbine à gaz selon l'une des revendications 1 à 5, **caractérisée en ce que** le carter comprend un système d'acheminement de gaz au moyen duquel, lors du fonctionnement de la turbine à gaz, un gaz traversant le canal de passage d'air (28) est acheminé vers les composants du carter qui sont disposés en aval du canal de passage d'air (28) par rapport à une direction d'écoulement prédéterminée du carter.

7. Turbine à gaz selon l'une des revendications 1 et 6, **caractérisée en ce que** l'au moins une aube directrice (12) est disposée dans la zone d'un compresseur et/ou dans la zone d'une turbine.

8. Aube directrice (12) destinée à être montée sur un carter d'une turbine à gaz, comprenant :
- un ensemble carénage (21) comportant un carénage (16) radialement extérieur à l'état monté et un dispositif de maintien de carénage (23) au moyen duquel le carénage (16) peut être fixé au carter ; ainsi que
- une pale (18) s'étendant radialement vers l'intérieur à partir de l'ensemble carénage (21) ;
- le dispositif de maintien de carénage (23) ou des parties de celui-ci, comprennent au moins un canal de passage de l'air (28) qui permet un passage d'écoulement à travers le dispositif de maintien de carénage (23) à l'état monté de l'aube directrice (12), et le dispositif de maintien de carénage (23) comprenant, sur un côté du carénage (16) opposé à la pale (18), au moins un crochet de carénage (22, 26) au moyen duquel le carénage (16) peut être fixé au carter, **caractérisé en ce que** le crochet de carénage (22), qui est disposé dans la zone d'un bord d'entrée de profilé (20) de la pale (18), comprend le canal de passage d'air (28), le canal de passage d'air (28) étant en forme de fente et/ou au moins partiellement en forme d'arc de cercle et/ou en forme d'arc d'ellipse en coupe transversale.

9. Aube directrice (12) selon la revendication 8, **caractérisée en ce que** celle-ci forme, avec au moins une et de préférence trois autres aubes directrices (12), un segment d'aubes directrices (10).

10. Procédé de fabrication d'une aube directrice (12) selon la revendication 8.
